Europäisches Patentamt

European Patent Office

Office européen des brevets

(11) Numéro de publication: **0 234 145 B1**

## FASCICULE DE BREVET EUROPEEN

(45) Date de publication de fascicule du brevet:
23.10.91

(51) Int. Cl.⁵: **H02M 3/337**

(21) Numéro de dépôt: **86402732.1**

(22) Date de dépôt: **09.12.86**

(54) **Circuit de correction automatique de symétrie pour hâcheur de courant symétrique.**

(30) Priorité: **13.12.85 FR 8518527**

(43) Date de publication de la demande:
**02.09.87 Bulletin 87/36**

(45) Mention de la délivrance du brevet:
**23.10.91 Bulletin 91/43**

(84) Etats contractants désignés:
**AT BE CH DE ES FR GB GR IT LI LU NL SE**

(56) Documents cités:
**FR-A- 2 096 584
US-A- 4 301 499
US-A- 4 541 041**

(73) Titulaire: **THOMSON-LGT LABORATOIRE GE-
NERAL DES TELECOMMUNICATIONS
1, rue de l'Hautil
F-78700 Conflans-Sainte Honorine(FR)**

(72) Inventeur: **Nollet, Michel Thomson-CSF
SCPI-19, avenue de Messine
F-75008 Paris(FR)**

(74) Mandataire: **Lincot, Georges et al
THOMSON-CSF SCPI
F-92045 PARIS LA DEFENSE CEDEX 67(FR)**

## Description

La présente invention concerne un circuit de correction automatique de symétrie pour hâcheur de courant symétrique. Elle s'applique à la réalisation des convertisseurs et régulateurs statiques à courant continu munis de hâcheurs de courant à transformateurs du type par exemple décrit dans le brevet US 4 301 499.

Parmi les différentes réalisations connues des convertisseurs ou régulateurs à courant continu à transformateur, les montages symétriques présentent par rapport aux montages assymétriques au moins trois avantages qui peuvent être résumés de la façon suivante :

1) ils utilisent la totalité de la dynamique magnétique du noyau du transformateur, ce qui permet de réduire les dimensions de ce dernier et son prix, à fréquence, rendement et puissance de sortie comparables;

2) les courants impulsionnels appelés et fournis ont une fréquence double de la fréquence de fonctionnement, ce qui facilite les problèmes de filtrage.

3) le rapport cyclique, c'est-à-dire le rapport du temps de transfert d'énergie à la durée d'un cycle, peut être très proche de l'unité ce qui réduit les courants efficaces présents dans tous les composants de puissance.

Bien qu'intéressants au plan des principes, les montages symétriques posent cependant des problèmes de réalisation. Ils nécessitent généralement un nombre plus important de composants que ne l'exigent les montages assymétriques. Leur circuit de commande est plus complexe. Les risques de conduction simultanée dans les deux voies de conduction et le maintien d'une symétrie parfaite de fonctionnement entre les deux voies amènent des difficultés de réalisation.

Les causes d'assymétrie de fonctionnement sont nombreuses, parmi celles-ci, il existe celles qui sont dues aux différences de caractéristiques de deux composants montés symétriquement, celles résultant d'assymétrie de câblage ou de dispositions des circuits intégrés sur leur circuit imprimé, celles résultant d'une différence de longueur des créneaux de commande de deux interrupteurs due, par exemple, à une imperfection du circuit de commande ou à la réintroduction, dans les étages sensibles du circuit de commande, d'une partie des créneaux de tension ou des dents de scie de courant présentes sur le primaire et le secondaire du transformateur, introduites par des liaisons parasites non symétriques capacitives ou inductives.

L'assymétrie de fonctionnement entraîne un décalage du point de fonctionnement du transformateur sur sa dynamique magnétique, une diminution du rendement énergétique et une diminution de la fiabilité. Elle conduit à un surdimensionnement des composants de puissance, et enfin, elle est la cause de risques d'instabilité.

Le but de l'invention est de pallier les inconvénients précités.

A cet effet, l'invention a pour objet, un circuit de correction automatique de symétrie pour hâcheur de courant symétrique comprenant deux voies de courant commandées alternativement par deux signaux de fréquence f fournis par un circuit de commande et couplées par un point de liaison commun à une borne d'alimentation en continu du hâcheur à travers une résistance, caractérisé en ce qu'il comprend un circuit résonnant accordé sur la fréquence f connecté en parallèle aux extrémités de la résistance, et couplé au circuit de commande pour régler la symétrie entre les amplitudes des courants traversant chacune des deux voies en fonction de l'amplitude des oscillations de fréquence engendrées par le circuit résonnant.

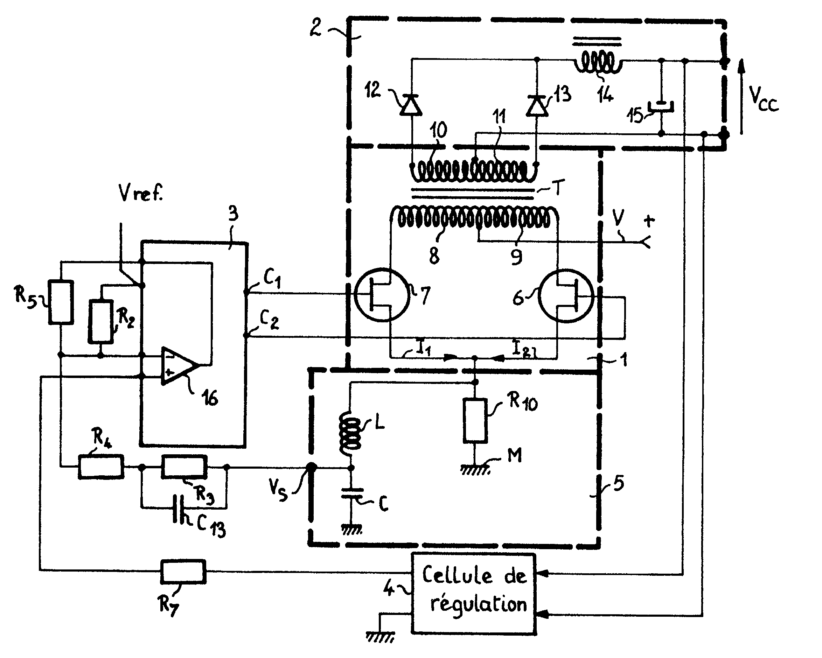

D'autres caractéristiques et avantages de l'invention apparaîtront ci-après à l'aide de la description qui va suivre faite au regard de la figure unique annexée qui représente, une alimentation à découpage munie du circuit de correction automatique de symétrie selon l'invention.

L'alimentation à découpage qui est représentée sur la figure unique comprend un circuit hâcheur de courant 1 couplé à une cellule redresseuse et de filtrage 2, représentés à l'intérieur de rectangles en pointillés. L'alimentation à découpage représentée comprend également un circuit de commande 3 à modulation de largeur d'impulsions et une cellule de régulation 4. Le circuit de correction automatique de symétrie selon l'invention est représenté en 5 à l'intérieur d'un rectangle en pointillés.

Le circuit hâcheur de courant 1 est constitué par deux interrupteurs de courant 6 et 7 formés par des transistors, thyristors, ou tout dispositif équivalent, montés dans un mode "push-pull", respectivement à une extrémité de deux demi-enroulements primaires 8 et 9 d'un transformateur T. Les extrémités respectives des demi-enroulements primaires 8 et 9 qui ne sont pas reliées aux interrupteurs de courant 6 et 7, sont reliées ensemble pour former un point milieu du primaire du transformateur T et recevoir la tension V+ d'alimentation en continu du circuit hâcheur 1. Les deux autres extrémités des interrupteurs de courant 6 et 7 sont également reliées ensemble à la masse d'alimentation M du circuit hâcheur 1 au travers d'une résistance R10 compris dans le circuit de correction 5.

Le secondaire du transformateur T est constitué par deux demi-enroulements 10 et 11 dont deux extrémités sont reliées ensemble pour former un point milieu et dont les deux autres extrémités sont reliées à des anodes de diodes redresseuses 12 et 13 de la cellule de redressement et de filtrage 2. Les cathodes des diodes 12 et 13 sont reliées ensemble pour former un circuit de redressement à double alternance, et le point commun aux deux cathodes des diodes 12 et 13 est relié à une extrémité d'une inductance de filtrage 14 qui forme, avec un condensateur 15, un filtre passe-bas dans la cellule de redressement et de filtrage 2, pour filtrer la composante moyenne du courant fourni par les deux diodes 12 et 13. La tension de sortie VCC de l'alimentation à découpage, représentée sur la figure unique, est prélevée aux bornes du condensateur 15.

Les interrupteurs de courant 6 et 7 du circuit hâcheur de courant sont commandés par deux sorties marquées C1 et C2 du circuit de commande 3 qui commandent alternativement le passage du courant au travers des interrupteurs de courant 6 et 7. Selon un mode préféré de réalisation de l'invention le circuit de commande 3 est constitué par le composant connu sous la référence SG1524 et commercialisé par la Société SILICON GENERAL. Ce composant comprend typiquement, un générateur de dents de scie à fréquence constante, un comparateur comparant le signal en dents de scie au signal de sortie d'un amplificateur opérationnel 16, une logique de tri conduisant le résultat de cette comparaison alternativement à la sortie C1 et à la sortie C2, l'amplificateur opérationnel 16 est relié sur son entrée "-", d'une part, à une tension de référence marquée Vref au travers d'une résistance R2 et, d'autre part, à une sortie marquée VS du circuit de correction automatique 5 à travers deux résistances R3 et R4 montées en série. Une résistance R5 est également montée entre la sortie et l'entrée marquée "-" de l'amplificateur opérationnel 16 pour permettre la sommation des tensions $V_s$ et Vref au travers des résistances de sommation R3, R4 et R2. L'entrée marquée "+" de l'amplificateur opérationnel 16 est reliée à une sortie de la cellule de régulation 4 qui compare l'amplitude de la tension VCC obtenue aux bornes du condensateur 15 à une tension de référence, non représentée, interne à la cellule de régulation, pour appliquer un signal d'erreur à l'entrée marquée "+" de l'amplificateur opérationnel 16 au travers d'une résistance R7.

Le circuit qui vient d'être décrit est complété par le circuit 5 comprenant un circuit résonnant série formé par une inductance L et un condensateur C montés en série aux bornes de la résistance R10 de couplage des deux voies de conduction formées par les deux interrupteurs 6 et 7. Le point commun à l'inductance L et au condensateur C est relié à la borne de sortie $V_s$ du circuit de correction automatique 5.

Le fonctionnement de l'alimentation à découpage est explicité ci-après, dans l'hypothèse où les signaux de commande fournis par les sorties C1 et C2 du circuit de commande 3 sont appliqués sur les entrées de commande des interrupteurs 6 et 7 avec des fréquences voisines de 50 KHz. Dans l'exemple de réalisation qui vient d'être décrit chacun des courants $I_1$ et $I_2$ fournis respectivement par les interrupteurs de courant 6 et 7 traversent la résistance de couplage commune R10, reliant la masse du circuit d'alimentation de l'alimentation à découpage à chacun des interrupteurs de courant 6 et 7. Dans l'hypothèse où le fonctionnement des interrupteurs est rigoureusement symétrique, le signal obtenu aux bornes de la résistance R10 est un signal trapézoïdal de fréquence 2f égale à 100 KHz. En supposant qu'une assymétrie se produise dans le fonctionnement de l'alimentation à découpage, un trapèze sur deux a son amplitude augmentée et il apparaît, aux bornes de la résistance R10, une composante de modulation de fréquence f. Cette modulation à la fréquence résiduelle f est exploitée par le circuit résonant formé de l'inductance L et du condensateur C dont les valeurs sont ajustées pour former un circuit bouchon, résonant de façon telle que la relation

$$L \cdot C \cdot (2.\pi.f)^2 = 1 \text{ soit vérifiée.}$$

Dans ces conditions, le circuit formé par l'inductance L et le condensateur C entre en résonance à la fréquence f, égale à 50 Khz, des signaux de commande appliqués sur les entrées de commande des interrupteurs 6 et 7. Le signal qui apparait aux bornes du condensateur C est un signal sinusoïdal dont l'amplitude à la fréquence f est proportionnelle à l'importance du défaut de symétrie. Ce signal est appliqué par la sortie de $V_s$ du circuit de correction 5 à l'entrée marquée "-" de l'amplificateur opérationnel 16 au travers des résistances R3 et R4, ce qui permet, d'additionner le signal marquant le défaut de symétrie au signal d'erreur fourni par la cellule de régulation 4 et de commander l'ouverture des interrupteurs 6 et 7 pour corriger le défaut de symétrie constaté par le circuit de correction 5.

Il est à noter que pour améliorer la correction de la symétrie des deux voies de conduction formées par les interrupteurs de courant 6 et 7, il est bon d'avancer la phase du signal de correction. Il est possible, également, d'avancer la phase du signal de correction en réglant judicieusement les valeurs du condensateur C ou de l'inductance L autour de sa valeur idéale qui vérifie exactement la relation $L.C.(2.\pi.f)^2 = 1$.

## Revendications

1. Circuit de correction automatique de symétrie pour hâcheur de courant symétrique comprenant deux voies de courant (6, 7) commandées alternativement par deux signaux de fréquence f fournis par un circuit de commande (3) et couplées par un point de liaison commun à une borne d'alimentation en continu du hâcheur à travers une résistance (R10), caractérisé en ce qu'il comprend un circuit résonnant (LC) accordé sur la fréquence f, connecté en parallèle aux extrémités de la résistance et couplé au circuit de commande (3) pour régler la symétrie entre les amplitudes des courants traversant chacune des deux voies (6, 7) en fonction de l'amplitude des oscillations de fréquence f engendrées par le circuit résonnant (LC).

2. Circuit selon la revendication 1, caractérisé en ce que le circuit résonnant est un circuit résonant série.

3. Circuit selon les revendications 1 et 2, caractérisé en ce que le circuit résonnant série comprend au moins une inductance (L) et un condensateur (C) reliés en série, le point commun ($V_s$) à l'inductance et au condensateur étant couplé à une entrée (-) du circuit de commande pour régler la symétrie des courants traversant les deux voies.

4. Circuit selon la revendication 3, caractérisé en ce que le circuit de commande comprend un amplificateur opérationnel (16), un générateur de dents de scie à fréquence constante, un comparateur pour comparer le signal en dent de scie au signal de sortie de l'amplificateur opérationnel (16), une logique de tri pour appliquer le résultat de la comparaison alternativement sur chacune des deux voies (6,7) et régler la symétrie des courants, l'amplificateur opérationnel (16) étant relié sur son entrée "-" d'une part, à une tension de référence ($V_{ref}$) et d'autre part, sur son entrée " + " au point commun à l'inductance (L) et au condensateur (C) du circuit résonnant.

## Claims

1. An automatic symmetry correcting circuit for a symmetric current chopper including two current paths (6, 7) which are alternately controlled by two signals of frequency f delivered by a control circuit (3) and coupled by a common connection point to a direct current power terminal of the chopper via a resistor (R10), characterized in that the correcting circuit comprises a resonant circuit (LC) tuned to the frequency f, connected in parallel to the ends of the resistor and coupled to the control circuit (3) for controlling the symmetry between the amplitudes of the currents passing through each of the two paths (6, 7) in accordance with the amplitude of the oscillations of frequency f which are generated by the resonant circuit (LC).

2. A circuit according to claim 1, characterized in that the resonant circuit is a series resonance circuit.

3. A circuit according to claims 1 and 2, characterized in that the series resonance circuit comprises at least an inductance (L) and a capacitor (C) connected in series, the common connection point ($V_s$) of the inductance and the capacitor being coupled to an input (-) of the control circuit for controlling the symmetry of the currents passing through the two paths.

4. A circuit according to claim 3, characterized in that the control circuit comprises an operational amplifier (16), a sawtooth generator of constant frequency, a comparator for comparing the sawtooth signal with the output signal of the operational amplifier (16), a distribution logic for applying the result of the comparison alternately to each of the two paths (6, 7) and for controlling the symmetry of the currents, the operational amplifier (16) being connected via its input "-" on the one hand to a reference voltage ($V_{ref}$) and on the other hand via its input " + " to the common connection point of the inductance (L) and the capacitor (C) of the resonant circuit.

## Patentansprüche

1. Automatische Symmetriekorrekturschaltung für einen symmetrischen Stromzerhacker, mit zwei Strompfaden (6, 7), die abwechselnd von zwei Signalen mit der Frequenz f gesteuert werden, welche von einem Steuerkreis (3) geliefert werden, und die mit einem gemeinsamen Verbindungspunkt über einen Widerstand (R10) an eine Gleichstromversorgungsklemme des Zerhakkers angeschlossen sind, dadurch gekennzeichnet, daß die Schaltung einen auf die Frequenz f abgestimmten Schwingkreis (LC) aufweist, der parallel an die Enden des Widerstands angeschlossen und an den Steuerkreis (3) gekoppelt ist, um die Symmetrie zwischen den Amplituden der jeden der beiden Pfade (6, 7) durchfließenden Ströme in Abhängigkeit von der Amplitude der vom Schwingkreis (LC) mit der Frequenz f erzeugten Schwingungen zu regeln.

2. Schaltung nach Anspruch 1, dadurch gekennzeichnet, daß der Schwingkreis ein Reihenschwingkreis ist.

3. Schaltung nach Anspruch 1 und 2, dadurch gekennzeichnet, daß der Reihenschwingkreis mindestens eine Induktanz (L) und einen in Reihe dazu geschalteten Kondensator (C) aufweist, wobei der gemeinsame Verbindungspunkt ($V_s$) von Induktanz und Kondensator an einen Eingang (-) des Steuerkreises zur Regelung der Symmetrie der die beiden Pfade durchfließenden Ströme angekoppelt ist.

4. Schaltung nach Anspruch 3, dadurch gekennzeichnet, daß der Steuerkreis einen Operationsverstärker (16), einen Sägezahngenerator mit konstanter Frequenz, einen Komparator zum Vergleichen des Sägezahnsignals mit dem Ausgangssignal des Operationsverstärkers (16), eine Verteilerlogik zum abwechselnden Anlegen des Vergleichsergebnisses an einen der beiden Pfade (6, 7) und zum Regeln der Symmetrie der Ströme aufweist, wobei der Operationsverstärker (16) einerseits mit seinem Eingang "-" an eine Bezugsspannung ($V_{ref}$) und andererseits mit seinem Eingang "+" an den gemeinsamen Verbindungspunkt von Induktanz (L) und Kondensator (C) des Schwingkreises angeschlossen ist.

Cellule de
régulation